# EUROPÄISCHE PATENTANMELDUNG

(11) **EP 2 551 634 A1**
(43) Veröffentlichungstag der Anmeldung: **30.01.2013**
(21) Anmeldenummer: 11175313.3
(22) Anmeldetag: 26.07.2011
(51) Int. Cl.: G01B 11/30, G01N 21/88

(54) **Retroflektierender Probenhalter und Messeinrichtung**

(71) Anmelder: Alicona Imaging GmbH, 8074 Grambach bei Graz (AT)
(72) Erfinder: Helmli, Franz, 8505 St. Nikolai/Sausal (AT); Komoroczy, Bela, 8071 Wagersfeld (AT); Saghy, Attila, 8042 Graz (AT); Scherer, Stefan, 8010 Graz (AT); Prantl, Manfred, 8044 Graz (AT)
(74) Vertreter: Röggla, Harald

(57) **Zusammenfassung**

Die Erfindung betrifft eine Messeinrichtung (8; 15; 17; 20) und ein Messverfahren zur Verbesserung der Beleuchtung einer Probe (11) in der Messeinrichtung (8; 15; 17; 20). Ein Material (13; 26) mit retroreflektierenden Eigenschaften wird um die zu messende Probe (11) herum angeordnet (z.B. als Teil eines Probenhalters (13; 14; 22; 23; 24)), um die Beleuchtungssituation für den Fall zu verbessern, dass das Licht (L1) der Lichtquelle (9; 18; 21) der Messeinrichtung (8; 15; 17; 20) die Probe (11) oder Teile davon nicht ausreichend ausleuchtet. Das Licht (L1) das von der Lichtquelle (9; 18; 21) auf die Probe (11) trifft und von ihr in Richtung des retroreflektierenden Materials (13; 26) reflektiert wird, wird vom retroreflektierenden Material (13; 26) wiederum auf die Probe (11) zurückgeworfen und kann somit wiederum in die Optik (19) der Messeinrichtung (8; 15; 17; 20) gelangen. Somit können damit auch kaum messbare Proben (11) - zum Beispiel hoch polierte oder stark reflektierende - gemessen werden.

## Beschreibung

Die Erfindung betrifft eine Messeinrichtung zur optischen Messung von Eigenschaften einer Probe, wobei von einer Lichtquelle abgegebenes Licht an der Probe teilweise in den Detektionsbereich eines optischen Detektors reflektiert wird und anhand des Detektionsergebnisses des Detektors zumindest eine Eigenschaft der Probe messbar ist.

Aus dem Stand der Technik ist bekannt, dass Licht auf die Probe fallen muss, um Eigenschaften der Probe mit Hilfe eines optischen Messverfahrens messen zu können. Dieses Licht wird durch die Probe reflektiert, gestreut oder gebrochen und ein Teil davon erreicht schließlich den Detektionsbereich eines optischen Detektors, der beispielsweise eine abbildende Optik aufweisen kann. Als Detektionsbereich der abbildenden Optik ist die sogenannte "numerische Apertur" bekannt, wobei Licht nur in einem gewissen Raumwinkel von dem Detektor eingefangen wird. In gewissen Situationen, abhängig beispielsweise von der Neigung der Oberfläche der Probe zum einfallenden Licht, der Probenoberfläche oder der Beleuchtungsrichtung, wird ein Großteil des Lichtes in eine Richtung reflektiert, die nicht Teil des erfassten Raumwinkels beziehungsweise des Detektionsbereichs ist. In solchen Fällen ist die optische Messung der Eigenschaften der Probe nicht oder nur sehr eingeschränkt möglich.

Der Erfindung liegt die Aufgabe zugrunde eine Messeinrichtung und ein Messverfahren zu schaffen, mit dem auch bei den vorstehend beschriebenen Situationen eine optische Messung von Eigenschaften der jeweiligen Probe ermöglicht ist.

Erfindungsgemäß wird diese Aufgabestellung dadurch gelöst, dass eine die Probe zumindest teilweise umgebende Reflexionsschicht derart angeordnet ist, dass zumindest ein Teil des von der Probe in andere Richtungen als in den Detektionsbereich des Detektors reflektierte Licht zurück auf die Probe reflektiert wird.

Retroreflektierende Materialien haben ein breites Einsatzgebiet. Sie werden beispielsweise bei Verkehrszeichen, in Kleidung zur erhöhten Sichtbarkeit, für Lichtschranken oder der Telekommunikation eingesetzt. Durch das erfindungsgemäße Vorsehen der die Probe umgebenden Reflexionsschicht ist vorteilhafterweise erreicht, dass die Probe wesentlich besser beleuchtet wird uns somit in manchen Situationen eine Messung überhaupt erst ermöglicht wird. In anderen Situationen, in denen eine Messung nur mit dem direkt von der Lichtquelle auf die Probe fallenden Licht prinzipiell möglich wäre ergibt sich, dass durch die zusätzliche Beleuchtung eine zuverlässigere und genauere optische Messung ermöglicht ist.

Es kann erwähnt werden, dass eine optische Messeinrichtung aus dem Stand der Technik bekannt ist, die Retroreflektoren dazu benutzt, um von der zu messende Oberfläche reflektiertes Licht umzulenken. Allerdings wird hierbei von dem Detektor unmittelbar die auf dem Retroreflektor entstehende Reflexion detektiert, um die Eigenschaften der Probe zu ermitteln. Der Strahlengang verläuft bei dieser bekannten Messeinrichtung somit von der Lichtquelle über die Probe und den Retroreflektor direkt in den Detektionsbereich des Detektors. Gemäß der Erfindung ist im Gegensatz hierzu vorgesehen, die Beleuchtungssituation auf der Probe durch die Retroreflexion zu verbessern.

Weitere vorteilhafte Ausgestaltungen der erfindungsgemäßen Messeinrichtung werden im Folgenden anhand der Figuren näher erläutert.
Figuren 1A und 1B zeigen den Strahlengang in prismatisch retroreflektierenden Materialien entsprechend dem Stand der Technik.
Figuren 2A und 2B zeigen den Strahlengang in retroreflektierenden Materialien mit Mikrokugellinsen entsprechend dem Stand der Technik.
Figur 3 zeigt eine Anordnung mit einem Retroreflektor für eine optische Messeinrichtung gemäß einem ersten Ausführungsbeispiel der Erfindung.
Figur 4 zeigt eine Anordnung mit einem retroreflektierenden Probenhalter für eine optische Messeinrichtung gemäß einem zweiten Ausführungsbeispiel der Erfindung.
Figur 5 zeigt eine Anordnung mit interner Beleuchtung für eine optische Messeinrichtung gemäß einem dritten Ausführungsbeispiel der Erfindung.
Figur 6 zeigt eine Anordnung mit externer oder Ringlichtbeleuchtung für eine optische Messeinrichtung gemäß einem vierten Ausführungsbeispiel der Erfindung.
Figuren 7 zeigen drei Ausführungsbeispiele erfindungsgemäßer Probenhalter.

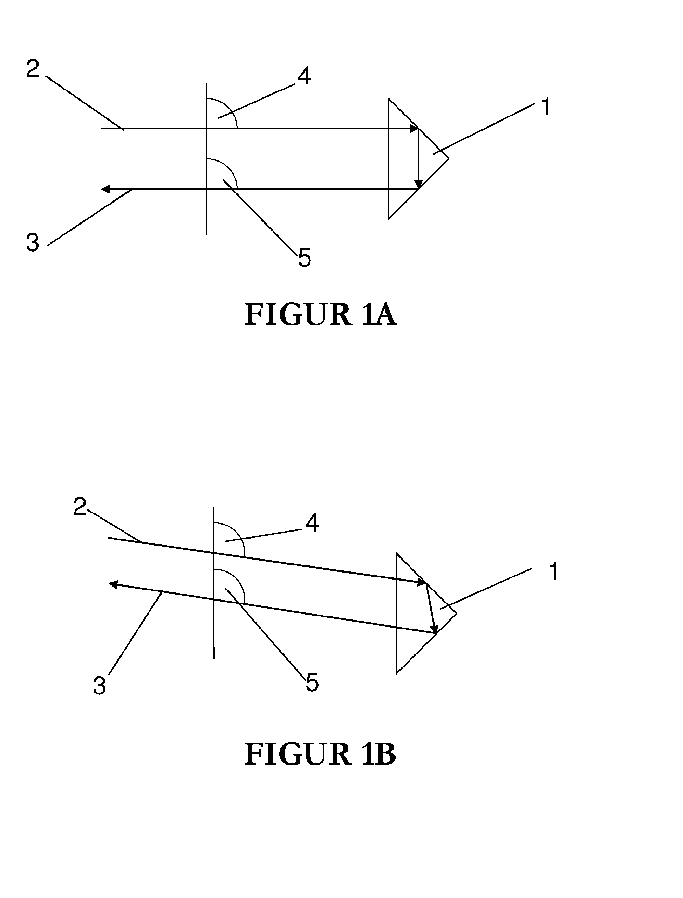

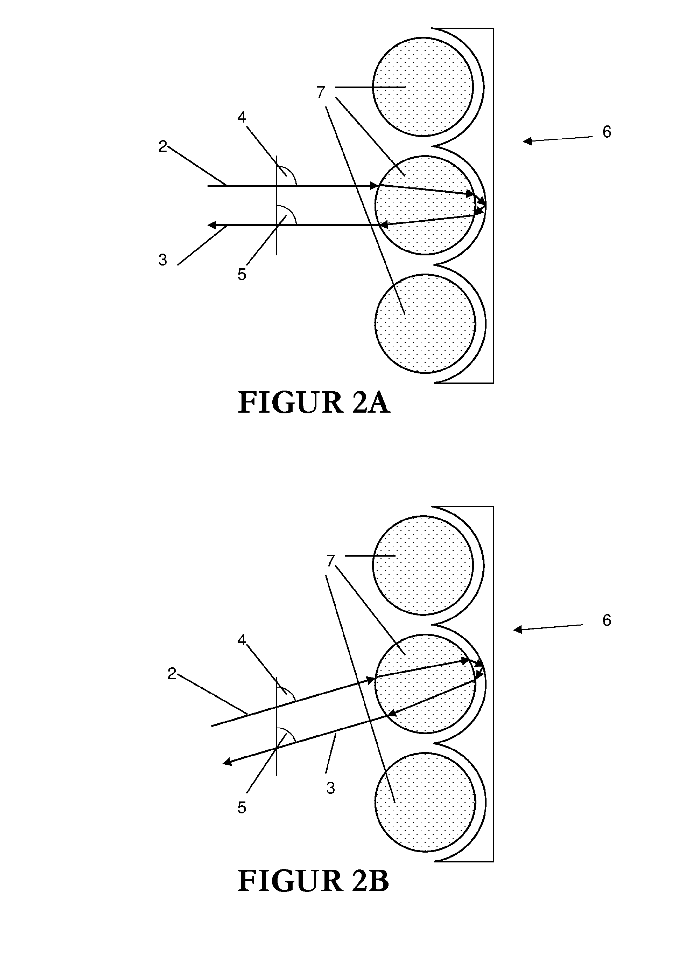

In den Figuren 1 und 2 ist der Strahlengang durch retroreflektierende Materialien gemäß dem Stand der Technik dargestellt. Solche retroreflektierenden Materialien werden zum Aufbau einer Reflexionsschicht genutzt. In den Figuren 1A und 1B ist ein Prisma 1 bzw. ein prismatisches retroreflektierendes Material als Retroreflektor dargestellt. Das Prisma 1 ist als Würfelspitzenprisma (engl. "corner cube prism") ausgeführt. Ein perfektes Würfelspitzenprisma reflektiert das in einem Einfallswinkel 4 einfallende Licht 2 unabhängig vom Einfallswinkel 4 exakt parallel in einem Ausfallswinkel 5 zurück, wie diese anhand der Figuren 1A und 1B ersichtlich ist. Eine Parallelverschiebung des ausfallenden Lichtstrahls 3 ist abhängig von der Größe des Prismas 1 und dem Einfallspunkt in dem Prisma 1.

In den Figuren 2A und 2B ist eine weitere Variante für einen Retroreflektor 6 mit Mikrokugellinsen 7 dargestellt. Auch bei diesem Retroreflektor 6 stimmen bei perfekt geformten Mikrokugellinsen 7 die Einfallswinkel 4 mit den Ausfallswinkel 5 überein.

Kommerziell erhältliche Retroreflektoren sind aufgrund von physikalischen und herstellungsbedingten Grenzen nie ganz perfekt. Das heißt, dass das reflektierte Licht in einem kleinen Winkelbereich gestreut wird, statt nur in genaue eine definierte Richtung zurückzustrahlen. Das rückgestrahlte Licht wird deshalb leicht diffus gestreut. Dieser Effekt wird bei der erfindungsgemäßen Messeinrichtung ausgenutzt, worauf nachfolgend eingegangen ist.

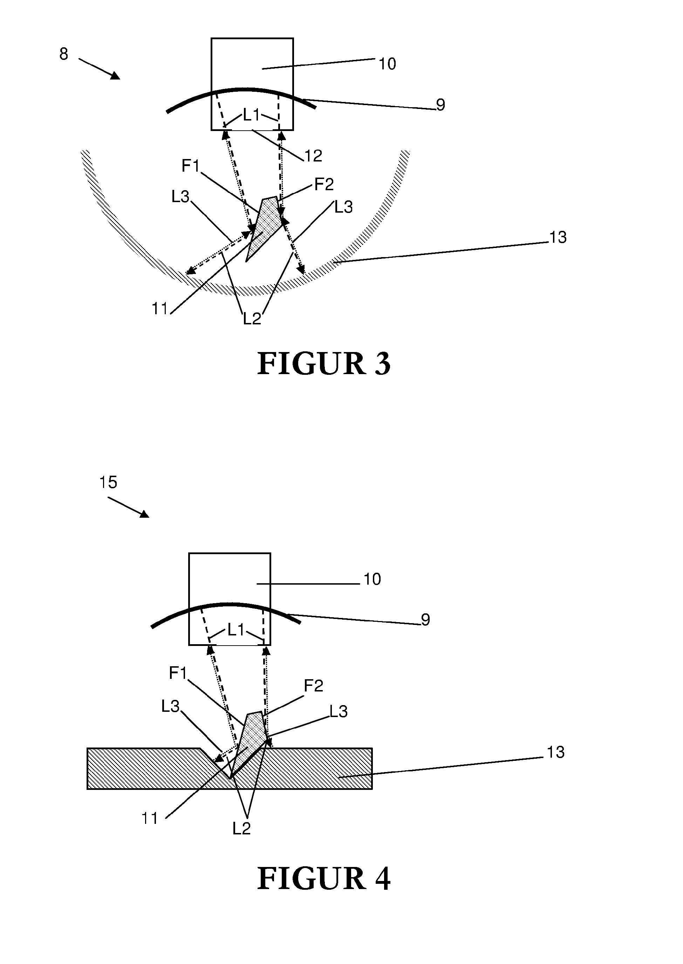

Figur 3 zeigt eine Anordnung mit einem Retroreflektor für eine optische Messeinrichtung 8 gemäß einem ersten Ausführungsbeispiel der Erfindung. Die Messeinrichtung 8 weist eine Lichtquelle 9 auf, die durch ein Ringlicht gebildete ist, das einen Detektor 10 der Messeinrichtung 8 ringförmig umgibt. Licht L1 von der Lichtquelle 9 fällt auf die zu untersuchende Probe 11. Die Oberfläche der Probe 11 weist eine nur geringe Streuwirkung auf und die Flächen F1 und F2 sind zu dem einfallenden Licht L1 stark geneigt, weshalb praktisch das gesamte von der Lichtquelle 9 einfallende Licht L1 an den Flächen F1 und F2 als von der Probe 11 reflektiertes Licht L2 abgegeben wird. Der durch eine Aufnahmeoptik gebildete Detektor 10 weist einen Detektionsbereich 12 auf, der durch die numerische Apertur der Aufnahmeoptik gebildet ist. Durch die praktisch nicht vorhandene Streuwirkung der Probe 11 fällt kein Anteil des einfallenden Lichts L1 auf den Detektionsbereich 12. Gerade dieses von der Probe 11 zurück in den Detektionsbereich reflektierte Licht ist aber zur Ermittlung eines Detektionsergebnisses nötig, um bei der Messung auf eine oder mehrere Eigenschaften der Probe 11 schließen zu können. Die Messung der Probe 11 wäre folglich nur schwer oder gar nicht möglich.

Um auch bei Proben wie der Probe 11 eine optische Messung der Eigenschaften der Probe 11 zu ermöglichen, weist die Messeinrichtung 8 nunmehr einen die Probe 11 teilweise umgebende Retroreflektor 13 mit einer Reflexionsschicht auf. In der vorliegenden Erfindung wird nun jenes Licht L2 welches den um die Probe 11 platzierten Retroreflektor 13 trifft, wieder zur Probe als rückreflektiertes Licht L3 zurückreflektiert und beleuchtet damit die Probe 11 zusätzlich. Wie vorsehend beschrieben reflektiert der Retroreflektor 13 das Licht L2 leicht diffus, weshalb das rückreflektierte Licht L3 gegenüber der ursprünglichen Richtung leicht gestreut ist. Hierdurch trifft das von einem Strahl des Strahlengangs rückreflektierte Licht L3 auf einen breiteren Bereich der Probe 11 und kann von der Aufnahmeoptik besonders gut erfasst werden. Hierdurch ist der Vorteil erhalten, dass mit der Messeinrichtung 8 auch Eigenschaften der problematischen Probe 11 gemessen werden können.

Mit der Messeinrichtung 8 können z.B. mechanische Eigenschaften der Probe 11 gemessen werden. Als mechanische Eigenschaft könnte die Oberflächenrauheit oder Defekte (z.B. Kratzer) an der Oberfläche der Probe 11 gemessen werden.

Figur 4 zeigt eine Anordnung mit einem retroreflektierenden Probenhalter 14 für eine optische Messeinrichtung 15 gemäß einem zweiten Ausführungsbeispiel der Erfindung. Bei diesem Ausführungsbeispiel ist der Probehalter 14 z.B. aus Aluminium gefertigt, das an seiner der Probe 11 zugewandten Seite, auf der die Probe 11 teilweise aufliegt, mit einer Reflexionsschicht 16 beschichtet ist. Vorteilhafterweise reflektiert die Reflexionsschicht 16 das von der Probe 11 reflektierte Licht L2 zumindest teilweise wieder auf die Probe 11 zurück, wodurch die Probe 11 für die Messung gut ausgeleuchtet wird.

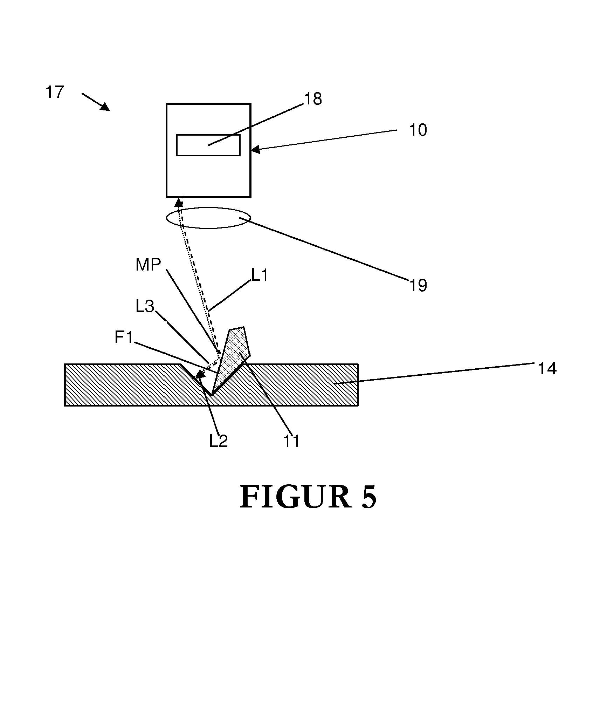

Figur 5 zeigt eine Anordnung mit interner Beleuchtung für eine optische Messeinrichtung 17 gemäß einem dritten Ausführungsbeispiel der Erfindung. Das von einer Lichtquelle 18 in dem Detektor 10 abgegebene Licht L1 beleuchtet hier die Probe 11 durch eine Abbildungsoptik 19 hindurch. Die stark geneigte Fläche F1 reflektiert das aufgebrachte Licht L1 nicht mehr zurück in den Detektor 10. Dieses Licht L2 wird von einem Probenhalter 14 mit Reflexionsschicht auf die Probe 11 wieder zurückgeworfen. Das zurückgeworfene Licht L3 trifft nun wiederum nahe der Messposition MP auf die Probe 11 und wird dort erneut gestreut, reflektiert, absorbiert oder gebrochen und ein Teil davon gelangt schließlich wieder in die Abbildungsoptik 19 und den Detektor 10. Die in dem Detektor 10 vorgesehene interne Beleuchtung hat bei der Messeinrichtung 17 den Vorteil, dass es zu einer schattenfreien Ausleuchtung der Probe kommt.

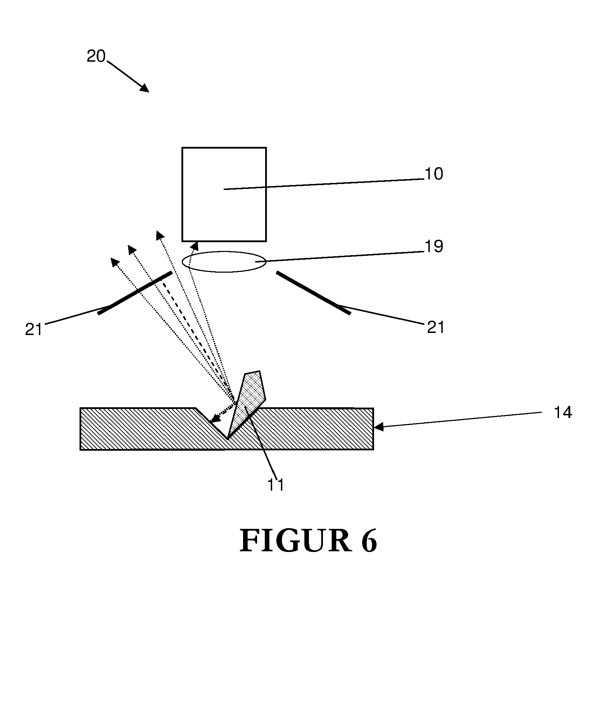

Figur 6 zeigt eine Anordnung mit externer oder Ringlichtbeleuchtung für eine optische Messeinrichtung 20 gemäß einem vierten Ausführungsbeispiel der Erfindung. Eine externe Lichtquelle ist als Ringlicht 21 ausgebildet, das ringförmig um die Abbildungsoptik 19 angeordnet ist. Das Vorsehen des externen Ringlichts 21 hat bei der Messeinrichtung 20 den Vorteil, dass der Einfallwinkel des Lichtes über einen großen Raumbereich gegeben ist, d.h. die Beleuchtungsapertur wird dadurch erhöht. Es sind auch Kombinationen aus interner und externer Beleuchtung möglich.

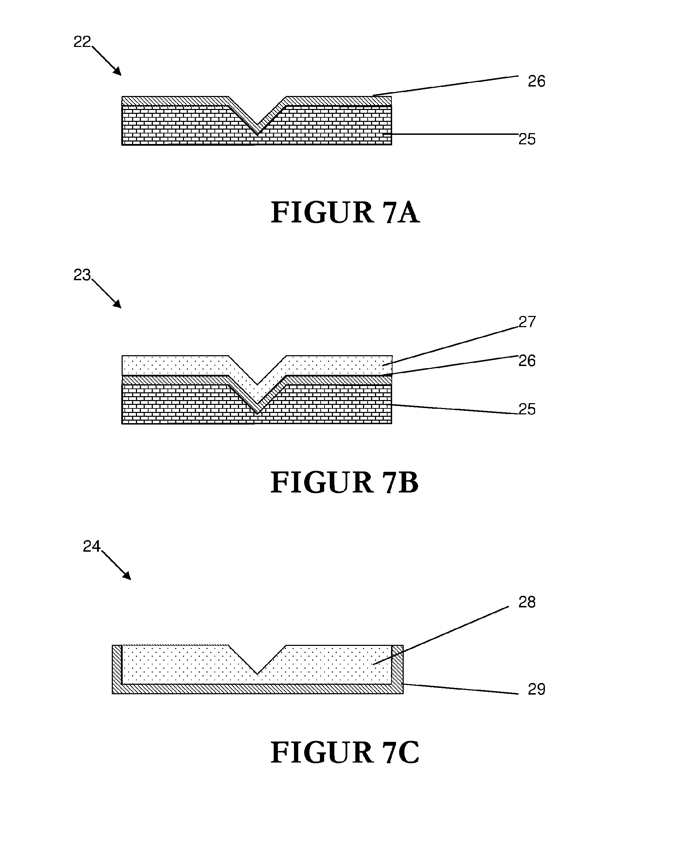

Das Licht L2, das von der Probe 11 reflektiert wird, kann erfindungsgemäß auf den oder die Retroreflektoren entweder direkt auftreffen oder auf einem Umweg über optisch transparente Materialien, Linsen, Prismen oder über jegliche andere reflektierende Oberflächen wie z.B. Spiegel geleitet werden. Die Figuren 7A, 7B und 7C zeigen beispielhaft drei Ausführungsbeispiele erfindungsgemäßer Probenhalter 22, 23 und 24. In Figur 7A ist das Basismaterial 25 des Probenhalters 22 mit retroreflektierendem Material 26 beschichtet, wie dies bereits anhand Figur 4 erläutert wurde. In Figur 7B ist das Basismaterial 25 des Probenhalters 23 mit retroreflektierendem Material 26 beschichtet und zusätzlich ist darüber noch ein optisch transparentes Material 27 aufgebracht. Dies verhindert eine Beschädigung des Retroreflektors. Figur 7C wiederum zeigt einen Probenhalter 24 welcher aus optisch transparentem Material 28 hergestellt ist und das retroreflektierende Material 29 ist auf der äußeren Oberfläche (an seiner der Probe 11 abgewandten Seite) so angebracht, dass das Licht L2 in das transparente Material des Probenhalters rückgestrahlt wird. Jeder dieser Probehalter 22, 23 und 24 hat abhängig von der Art und Größe der Probe 11 sowie abhängig von der zu messenden Eigenschaft der Probe Vorteile.

Auf den Aufbau des Detektors 10 ist hier nicht näher eingegangen, da diese von Messeinrichtungen gemäß dem Stand der Technik bekannt sind.

Es kann erwähnt werden, dass es besonders vorteilhaft ist Abschirmmittel vorzusehen, um ein Reflektieren des von der Reflexionsschicht reflektierten Lichts direkt in den Detektionsbereich des Detektors zu verhindern. Die Abschirmmittel könnten beispielsweise durch Blenden gebildet sein, die direkte Strahlen von der Reflexionsschicht in den Detektionsbereich des Detektors abblenden. Hierdurch ist erreicht, dass das Detektionsergebnis des Detektors nicht durch direkt von der Reflexionsschicht rückgestrahltes Licht verfälscht wird.

Es ist besonders vorteilhaft bei der optischen Messung der Eigenschaften von Proben das von der Probe in andere Richtungen als in den Detektionsbereich des Detektors reflektierte Licht zumindest teilweise von einer die Probe umgebenden Reflexionsschicht zurück auf die Probe zu reflektieren. Hierdurch werden die anhand der vorstehenden Ausführungsbeispiele beschriebenen Vorteile erhalten.

Es kann erwähnt werden, dass es besonders vorteilhaft wäre, wenn das gesamte von der Probe in andere Richtungen als in den Detektionsbereich des Detektors reflektierte Licht L2 zurück auf die Probe reflektiert werden würde. Dies wäre beispielsweise durch eine die Probe umgebende kugelförmige Reflexionsschicht ermöglicht, aus der nur der Detektionsbereich des Detektors als Öffnung vorgesehen ist. In der Praxis wird aber durch praktikablere Ausformungen der Reflexionsschicht nur ein geringerer, aber möglichst großer Teil des Lichts L2 wieder auf die Probe reflektiert werden.

## Patentansprüche

1. Messeinrichtung (8; 15; 17; 20) zur optischen Messung von Eigenschaften einer Probe (11), wobei von einer Lichtquelle (9; 18; 21) abgegebenes Licht (L1) an der Probe (11) teilweise in den Detektionsbereich (12) eines optischen Detektors (10) reflektiert wird und anhand des Detektionsergebnisses des Detektors (10) zumindest eine Eigenschaft der Probe (11) messbar ist, **dadurch gekennzeichnet, dass**
eine die Probe (11) zumindest teilweise umgebende Reflexionsschicht (13; 26; 29) derart angeordnet ist, dass zumindest ein Teil des von der Probe (11) in andere Richtungen als in den Detektionsbereich (12) des Detektors (10) reflektierte Licht (L2) zurück auf die Probe (11) reflektiert wird.

2. Messeinrichtung (15; 17; 20) gemäß Anspruch 1, **dadurch gekennzeichnet, dass** die Reflexionsschicht auf einem Probenhalter (13; 14; 22; 23; 24) der Messeinrichtung (15; 17; 20) zum Aufnehmen der Probe (11) während der Messung vorgesehen ist.

3. Messeinrichtung gemäß einem der vorherigen Ansprüche, **dadurch gekennzeichnet, dass** in dem Strahlengang des von der Probe (11) in andere Richtungen als in den Detektionsbereich (12) des Detektors (10) reflektierten Lichts ein optisch transparentes Material (27; 28) vorgesehen ist, das insbesondere zum Ablenken des Strahlengangs als Prisma oder Linse ausgebildet ist.

4. Messeinrichtung gemäß Anspruch 3, **dadurch gekennzeichnet, dass** die Reflexionsschicht (26) auf dem Probenhalter (23) mit dem optisch transparenten Material (27) beschichtet ist.

5. Messeinrichtung gemäß Anspruch 3, **dadurch gekennzeichnet, dass** der Probenhalter (24) durch das optisch transparente Material (28) gebildet ist und an seiner der Probe (11) abgewandten Seite mit der Reflexionsschicht (29) beschichtet ist.

6. Messeinrichtung (17; 20) gemäß einem der vorherigen Ansprüche, **dadurch gekennzeichnet, dass** der Detektionsbereich durch die numerische Apertur einer Aufnahmeoptik (19) gebildet ist.

7. Messeinrichtung gemäß einem der vorherigen Ansprüche, **dadurch gekennzeichnet, dass** die Reflexionsschicht derart angeordnet ist, dass ein Reflektieren des von der Reflexionsschicht reflektierten Lichts direkt in den Detektionsbereich des Detektors verhindert ist.

8. Messeinrichtung (15; 17) gemäß einem der vorherigen Ansprüche, **dadurch gekennzeichnet, dass** die Lichtquelle (18) in dem Detektor (10) vorgesehen ist und/oder den Detektor (10) umgebend und insbesondere als Ringlicht (9; 21) ausgeführt ist.

9. Probehalter (13; 14; 22; 23; 24) für eine Messeinrichtung (15; 17; 20) gemäß Anspruch 2, **dadurch gekennzeichnet, dass** der Probehalter (13; 14; 22; 23; 24) einen Bereich zum Aufnehmen der Probe (11) aufweist, und dass die Reflexionsschicht (26) als Teil des Probehalters (13; 14; 22; 23; 24) die in den Probehalter (13; 14; 22; 23; 24) aufgenommene Probe (11) umgibt.

10. Verfahren zur optischen Messung von Eigenschaften einer Probe, wobei von einer Lichtquelle (9; 18; 21) abgegebenes Licht (L1) an der Probe (11) teilweise in den Detektionsbereich (12) eines optischen Detektors (10) reflektiert wird und anhand des Detektionsergebnisses des Detektors (10) zumindest eine Eigenschaft der Probe (10) gemessen wird, **dadurch gekennzeichnet, dass**
das von der Probe (11) in andere Richtungen als in den Detektionsbereich (12) des Detektors (10) reflektierte Licht (L2) zumindest teilweise von einer die Probe (11) umgebenden Reflexionsschicht (13; 26) zurück auf die Probe (11) reflektiert wird.
